# FASCICULE DE BREVET EUROPEEN

(11) **EP 4 134 295 B1**
(45) Date de publication et mention de la délivrance du brevet: **13.11.2024**
(21) Numéro de dépôt: 22189604.6
(22) Date de dépôt: 09.08.2022
(51) Int. Cl.: B62D 37/04, B62H 1/06, B62K 11/00, A61G 5/10

(54) **VÉHICULE À AUTO-ÉQUILIBRAGE AVEC DISPOSITIF ANTI-BASCULE**
SELBSTAUSBALANCIERENDES FAHRZEUG MIT ANTI-KIPPVORRICHTUNG
SELF-BALANCING VEHICLE WITH NON-TILT DEVICE

(30) Priorité: 13.08.2021 FR 2108692
(43) Date de publication de la demande: 15.02.2023
(73) Titulaire: GusNGo, 92100 Boulogne-Billancourt (FR)
(72) Inventeur: IMBERT, Jean-Marc, 04100 MANOSQUE (FR)
(74) Mandataire: Cabinet Chaillot

(56) Documents cités:
- WO-A1-2012/017335
- WO-A1-2020/058582
- DE-A1- 102014 113 278

## Description

La présente invention concerne le domaine des véhicules à auto-équilibrage, et porte plus particulièrement sur un véhicule à auto-équilibrage comportant un dispositif anti-bascule.

De manière générale, pour prévenir les dysfonctionnements et pannes les véhicules à auto-équilibrage comprennent une redondance des systèmes de pilotage et de contrôle, de telle sorte que si l'un de leurs composants tombe en panne, le second composant correspondant prend le relais, évitant ainsi une panne du véhicule. Sans une telle redondance, la sécurité du véhicule ne pourrait pas être assurée.

Pour éviter cette redondance, qui augmente de manière importante le coût du véhicule, il a été proposé dans la demande internationale PCT WO 2020/058582 A1 d'utiliser un dispositif anti-bascule du type patin de stabilisation et qui comprend des moyens de mise en œuvre d'un déplacement d'urgence vers la position activée du patin de stabilisation, dans laquelle ce dernier est en mesure de venir en contact avec le sol pour éviter au véhicule de basculer.

L'un des inconvénients du véhicule selon la demande WO 2020/058582 A1 est qu'il ne comporte pas de moyens permettant d'assurer une stabilisation du véhicule en position arrêtée sur commande de l'utilisateur.

On connaît également de l'art antérieur des véhicules à auto-équilibrage qui comportent de tels moyens de stabilisation, généralement du type pied télescopique, actionnables par l'utilisateur. Le document DE 10 2014 113 278 A1 divulgue un véhicule comportant un dispositif anti-bascule pour une situation de parking du véhicule, se concentrant sur la sécurité de la stabilité du véhicule en position non dynamique (à l'arrêt).

Il n'existe toutefois pas de véhicule à auto-équilibrage permettant d'assurer ces deux modes de fonctionnement : un fonctionnement en stabilisation, suite à un premier type de commande provenant de l'utilisateur, et un fonctionnement en mode d'urgence, suite à un second type de commande consécutif à l'apparition d'un danger comme par exemple une panne électrique ou la détection d'un angle d'inclinaison excessif.

La présente invention vise ainsi à proposer un véhicule à auto-équilibrage comportant un dispositif anti-bascule qui non seulement permet d'assurer à la fois un fonctionnement en stabilisation et un fonctionnement en mode urgence, ce qui permet d'éviter les coûts supplémentaires associés à la redondance des systèmes de pilotage et de contrôle, mais encore soit de structure simple et fiable avec un encombrement minimal.

La présente invention a donc pour objet un véhicule à auto-équilibrage comportant :
- une base roulante, la base roulante comprenant un châssis, deux roues chacune aptes à tourner autour d'un axe de rotation et un dispositif d'entraînement configuré pour commander la rotation des roues et équilibrer dynamiquement le véhicule ; et
- un dispositif anti-bascule,
caractérisé par le fait que le dispositif anti-bascule comporte :
- un pied télescopique comprenant une partie fixe et une partie mobile ;
- une pièce de contact reliée à la partie mobile et configurée pour venir en contact avec le sol, la partie mobile étant déplaçable en translation, le long d'un axe longitudinal de la partie fixe, entre une position relevée où la pièce de contact ne s'oppose pas au déplacement du véhicule et une position abaissée où la pièce de contact vient en contact avec le sol pour éviter un basculement de la base roulante, la pièce de contact présentant au moins une région de contact avec le sol qui est décalée de l'axe longitudinal de la partie fixe de telle sorte que la force résultant du contact avec le sol applique sur la partie mobile un moment tel que celle-ci se bloque dans la partie fixe par arc-boutement ;
- un dispositif d'actionnement linéaire comprenant des moyens moteurs et une barre de guidage ayant une extrémité libre située à l'intérieur de la partie mobile,
- des moyens de verrouillage de la partie mobile, configurés pour verrouiller la partie mobile en une position de verrouillage, la position de verrouillage étant une position intermédiaire entre la position relevée et la position abaissée, les moyens de verrouillage étant aptes à déverrouiller automatiquement la partie mobile ;
- un ressort de compression qui prend appui sur une partie de sollicitation de la partie mobile, configuré pour être sollicité en compression par le déplacement de la partie de contact entre la position abaissée et la position relevée, la partie de contact étant configurée pour être déplacée de la position de verrouillage vers la position abaissée sous l'action du ressort de compression ;
- une pièce d'arrêt, disposée à l'intérieur de la partie mobile et configurée pour être déplaçable, sous l'action des moyens moteurs du dispositif d'actionnement linéaire, le long de la barre de guidage, entre l'extrémité libre de la barre de guidage et une position de butée, en butée contre la partie de sollicitation de la partie mobile ; et
- des moyens de commande du dispositif d'actionnement linéaire et des moyens de verrouillage, configurés pour à la fois actionner le dispositif d'actionnement linéaire et les moyens de verrouillage suite à un premier type de commande provenant de l'utilisateur et actionner automatiquement les moyens de verrouillage suite à un second type de commande consécutif de l'apparition d'un état préétabli.

Ainsi, un tel dispositif permet non seulement de stabiliser le véhicule non seulement à l'arrêt commandé (premier type de commande), mais encore en situation d'urgence (second type de commande), avec une structure simple, sûre et fiable, du fait notamment que le pied télescopique est bloqué en position abaissée par arc-boutement lorsque le véhicule à auto-équilibrage cherche à basculer.

On souligne ici que la présente invention n'est pas limitée à une structure particulière pour le dispositif d'entraînement des deux roues de la base roulante.

Selon un mode de réalisation particulièrement avantageux, la barre de guidage est une vis sans fin et la pièce d'arrêt est un écrou disposé à l'intérieur de la partie mobile et bloqué en rotation par rapport à cette dernière, l'écrou étant vissé sur la vis et les moyens moteurs étant configurés pour faire tourner la vis dans les deux sens de rotation, de telle sorte que le déplacement en translation de l'écrou est obtenu par rotation de la vis sous l'action des moyens moteurs.

Bien entendu, l'on pourra prévoir d'autres modes de réalisation pour les moyens moteurs, la barre de guidage et la pièce d'arrêt.

Selon un mode de réalisation, la partie fixe, la partie mobile et la pièce d'arrêt sont de section carrée.

Selon un mode de réalisation, les moyens de verrouillage comprennent un aimant de levage et un crochet actionnable par l'aimant de levage, un trou étant ménagé dans la partie fixe et un trou étant ménagé dans la partie mobile de sorte que le crochet est configuré pour bloquer la partie mobile au niveau du trou de celle-ci.

Selon un mode de réalisation, la partie de contact comporte une partie plane comprenant trois régions de contact.

Selon un mode de réalisation, le véhicule à auto-équilibrage comprend au moins un capteur IR configuré pour détecter la position de la pièce de contact, au moins une paire de trous circulaires traversants et au moins une paire de trous oblongs correspondants étant ménagées dans la partie fixe et la partie mobile, respectivement.

Selon un mode de réalisation, les moyens de verrouillage sont du type à manque de courant et configurés pour déverrouiller automatiquement la partie mobile en cas de manque de courant. On souligne ici que la configuration des moyens de commande autorise ce déverrouillage automatique, et le second type de commande mentionné ci-dessus peut être ainsi consécutif à une panne de courant. On souligne également que cela n'exclut pas que les moyens de commande soient configurés pour en outre déverrouiller les moyens de verrouillage lors de la détection d'un danger par un capteur, par exemple d'inclinaison de la base roulante.

Selon un mode de réalisation, le véhicule à auto-équilibrage comprend en outre un vérin de stabilisation, configuré pour être actionné par les moyens de commande suite au premier type de commande et configuré pour venir en appui sur la pièce de contact en position abaissée.

Selon un mode de réalisation, le véhicule à auto-équilibrage comporte un guidon, le guidon étant connecté aux moyens d'entraînement et configuré pour commander le déplacement du véhicule vers la gauche et vers la droite sous l'effet d'une pression de l'utilisateur vers la gauche et vers la droite, respectivement.

Selon un mode de réalisation, le véhicule à auto-équilibrage comporte une batterie configurée pour alimenter au moins les moyens d'entraînement, les moyens de commande, le dispositif d'actionnement linéaire et les moyens de verrouillage.

Le dispositif anti-bascule a été défini ci-dessus en tant que partie du véhicule à auto-équilibrage selon la présente invention. On souligne qu'est également divulgué par la présente un tel dispositif anti-bascule, pris isolément, pour véhicule à auto-équilibrage comportant une base roulante, éventuellement telle que définie ci-dessus, la partie fixe du pied télescopique étant destinée à être fixée à la base roulante et/ou étant munie de moyens de fixation à la base roulante.

Pour mieux illustrer l'objet de la présente invention, on va en décrire ci-après, à titre indicatif et non limitatif, plusieurs modes de réalisation avec référence aux dessins annexés.

Sur ces dessins :
[Fig. 1] est une vue de côté du véhicule à auto-équilibrage, le dispositif anti-bascule étant à l'état relevé ;
[Fig. 2] est une vue de côté du véhicule à auto-équilibrage, le dispositif anti-bascule étant à l'état abaissé ;
[Fig. 3] est une vue en perspective du châssis et du dispositif anti-bascule ;
[Fig. 4] est une vue en perspective du dispositif anti-bascule ;
[Fig. 5] est une vue de côté en coupe longitudinale du dispositif anti-bascule à une première position ;
[Fig. 6] est une vue de côté en coupe longitudinale du dispositif anti-bascule à une deuxième position ;
[Fig. 7] est une vue de côté en coupe longitudinale du dispositif anti-bascule à une troisième position ;
[Fig. 8] est une vue de côté en coupe longitudinale du dispositif anti-bascule à une quatrième position ;
[Fig. 9] est une vue arrière en coupe longitudinale du dispositif anti-bascule à une première position, ainsi qu'une vue rapprochée au niveau des moyens de détection de position ;
[Fig. 10] est une vue arrière en coupe longitudinale du dispositif anti-bascule à une deuxième position, ainsi qu'une vue rapprochée au niveau des moyens de détection de position ;
[Fig. 11] est une vue arrière en coupe longitudinale du dispositif anti-bascule à une troisième position, ainsi qu'une vue rapprochée au niveau des moyens de détection de position ; et
[Fig. 12] est une vue arrière en coupe longitudinale du dispositif anti-bascule à une quatrième position, ainsi qu'une vue rapprochée au niveau des moyens de détection de position.

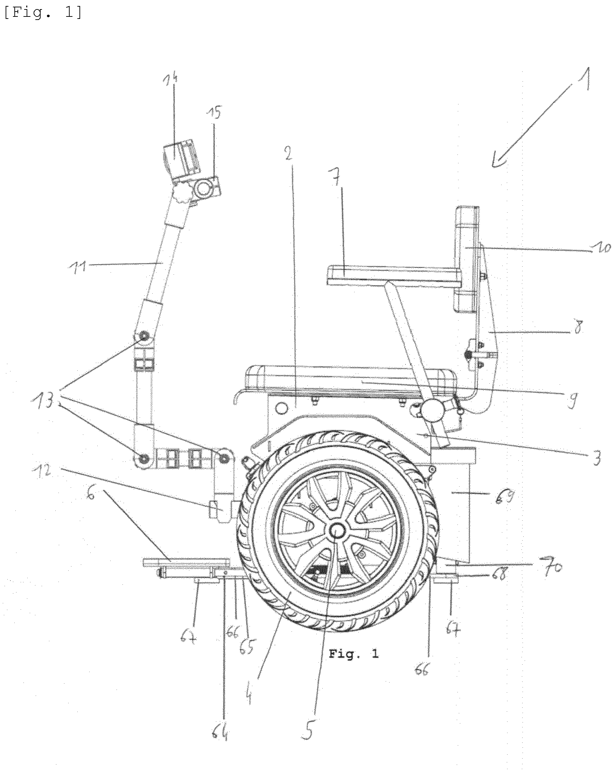

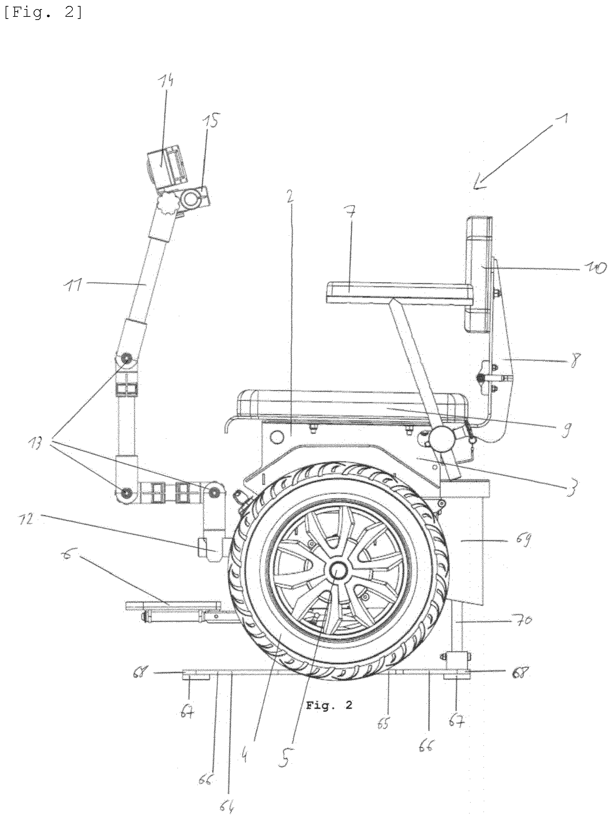

Si l'on se réfère aux Figures 1 et 2, on peut voir qu'il y est représenté un véhicule à auto-équilibrage 1 selon la présente invention. Comme de façon connue, un tel véhicule à auto-équilibrage 1 est du type gyropode et comporte une base roulante 2. La base roulante 2 comprend un châssis 3, deux roues 4 montées chacune à rotation sur un axe de rotation 5 et un dispositif d'entraînement. Comme de façon bien connue de l'homme du métier, le dispositif d'entraînement comprend pour chaque roue 4 un moteur et est configuré pour commander la rotation des roues 4 et équilibrer dynamiquement le véhicule à auto-équilibrage 1. Grâce à ce dispositif d'entraînement, une inclinaison du châssis 3 vers l'avant conduit à faire avancer le véhicule à auto-équilibrage 1 vers l'avant et une inclinaison du châssis 3 vers l'arrière conduit à faire avancer le véhicule à auto-équilibrage 1 vers l'arrière ou le freiner. Le véhicule à auto-équilibrage 1 selon la présente invention est également équipé de repose-pieds 6. De façon avantageuse, les repose-pieds 6 sont rabattables. Egalement, le véhicule à auto-équilibrage 1 comprend des accoudoirs 7 réglables du type couramment rencontré dans le domaine des gyropodes. Le véhicule à auto-équilibrage 1 comporte en outre un siège 8 comprenant une assise 9 et un dossier 10. De façon avantageuse, l'assise 9 et le dossier 10 sont reliés de façon articulée de façon à pouvoir rabattre le dossier 10 sur l'assise 9. Un guidon 11, connecté aux moyens d'entraînement, est prévu pour guider le déplacement vers la gauche et vers la droite du véhicule à auto-équilibrage 1 sous l'effet d'une pression de l'utilisateur vers la gauche et vers la droite, respectivement. De façon avantageuse, le guidon 11 est relié par une jonction 12 au châssis 3 et comprend des articulations 13 pour permettre son ajustement et permettre de le rabattre. Un tel guidon 11 est bien connu de l'homme du métier et ne sera pas décrit plus en détails ci-après. Comme représenté sur les Figures 1 et 2, le guidon 11 est équipé d'un dispositif de commande et d'affichage 14, de type écran tactile, monté sur un support 15 pour, entre autres, permettre à l'utilisateur de mettre le véhicule à auto-équilibrage 1 sous tension, le démarrer ou le charger électriquement. De façon préférentielle, le véhicule à auto-équilibrage 1 est alimenté par une batterie rechargeable embarquée et à laquelle les moyens d'entraînement sont connectés.

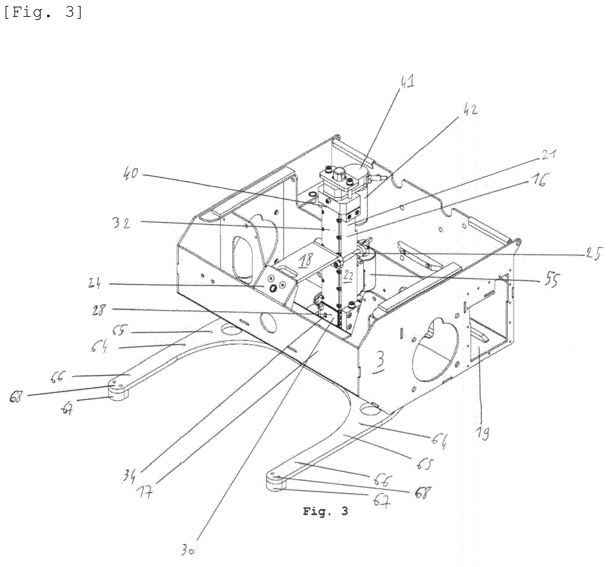

Selon la présente invention, le véhicule à auto-équilibrage 1 comporte un dispositif anti-bascule 16. Un tel dispositif anti-bascule 16 est configuré pour pouvoir stabiliser le véhicule à auto-équilibrage 1 non seulement lorsqu'il est à l'arrêt en situation de fonctionnement normal, mais encore en cas de situation de fonctionnement anormal prédéterminée, par exemple en cas de panne de courant ou d'inclinaison trop prononcée du châssis 3, et qui pourrait conduire au renversement du véhicule à auto-équilibrage 1. Pour ce faire, comme on peut le voir sur la Figure 3, le dispositif anti-bascule 16 est relié de façon fixe au châssis 3 au niveau d'une paroi latérale 17 de celui-ci par une première pièce de liaison 18 et au niveau d'une paroi de fond 19 du châssis 3 par une seconde pièce de liaison 20.

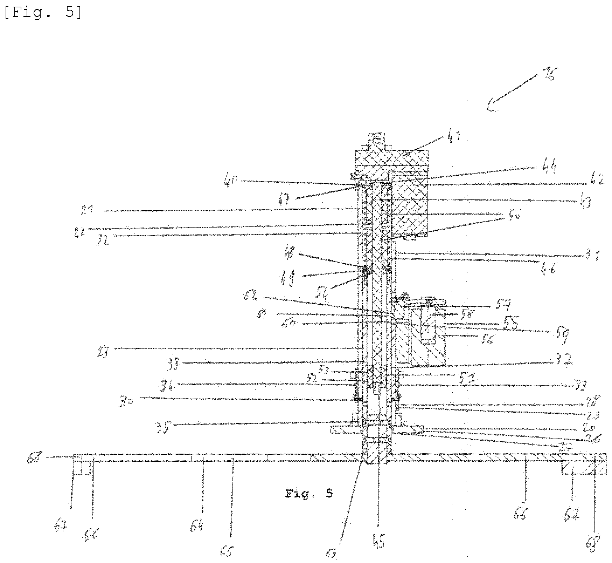

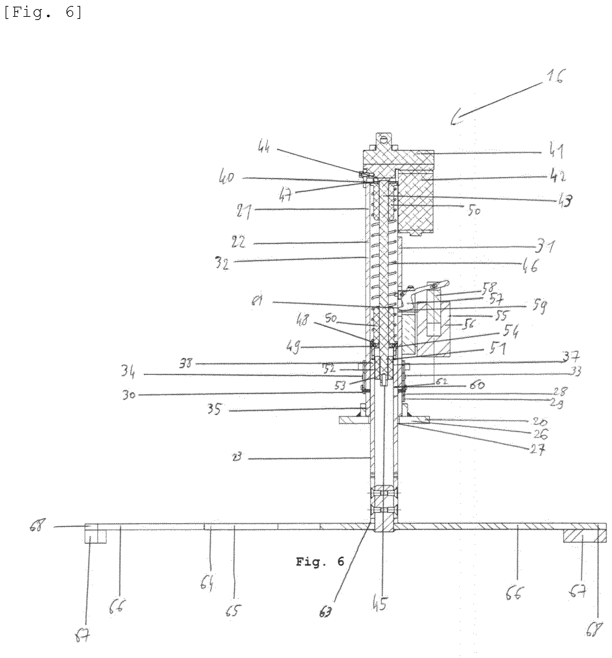

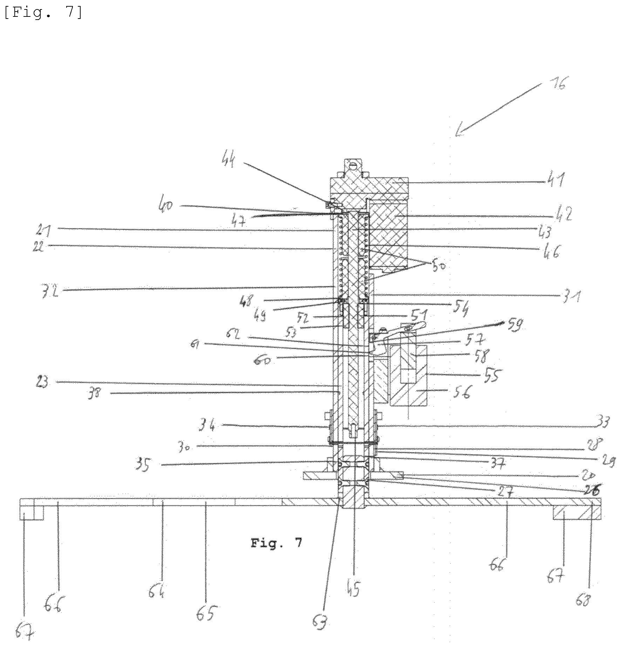

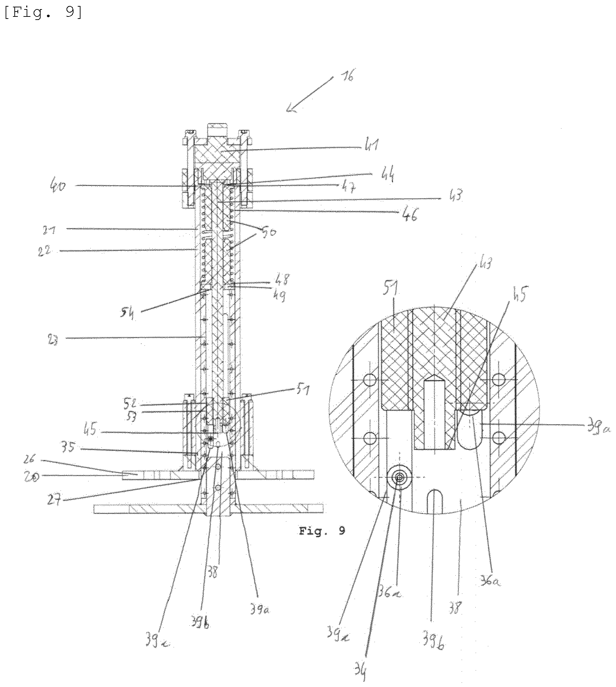

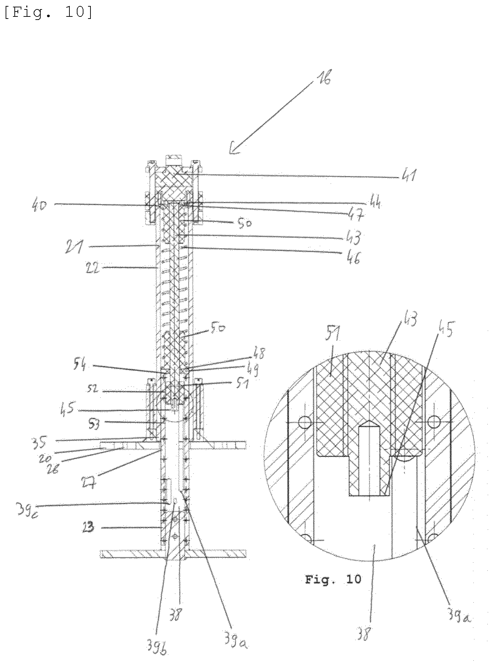

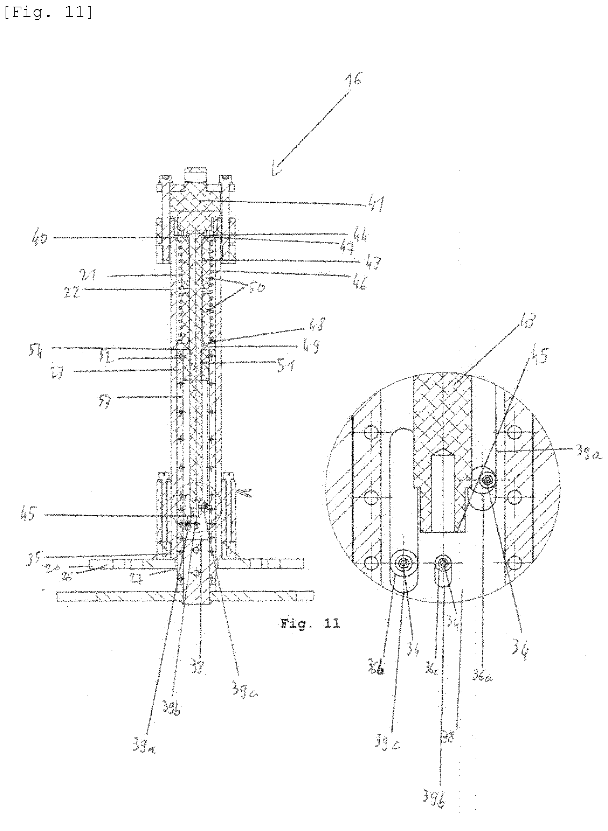

Le dispositif anti-bascule 16 comprend un pied télescopique 21 constitué par un tube externe creux 22 et un tube interne creux 23 configuré pour coulisser à l'intérieur du tube externe 22, de façon à se déployer hors du tube externe 22. Selon le mode de réalisation représentée sur les Figures 3-12, le tube externe 22 et le tube interne 23 présentent une section carrée.

La première pièce de liaison 18 et la seconde pièce de liaison 20 sont reliées au tube externe 22 de sorte que le tube externe 22 constitue une partie fixe du pied télescopique 21, solidaire du châssis 3, et la partie interne 23 constitue une partie mobile par rapport au châssis 3.

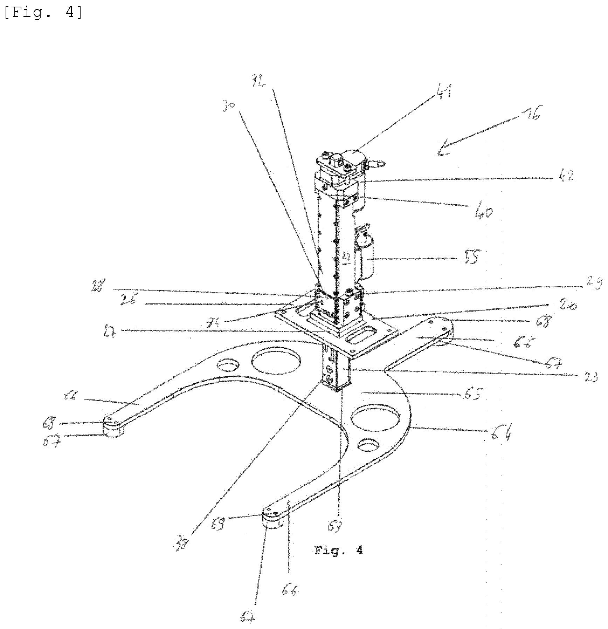

Selon le mode de réalisation représenté sur la Figure 3, la première pièce de liaison 18 comprend une patte 24 vissée à la paroi latérale 17 du châssis 3 et un système de brides de fixation 25 serrant le tube externe 22. Selon le mode de réalisation représenté sur les Figures 4-12, la seconde pièce de liaison 20 est constituée par une plaque 26 percée d'un alésage central 27 dans lequel le tube externe 22 est maintenu, et vissée sur la paroi de fond 19 du châssis 3. La première pièce de liaison 18 et la seconde pièce de liaison 19 sont configurées pour maintenir le pied télescopique 21 perpendiculairement à la direction de déplacement du véhicule à auto-équilibrage 1. Il convient de noter que l'homme du métier saura envisager tous moyens adaptés de fixation du pied télescopique 21 au châssis 3. Le dispositif anti-bascule 16 est équipé de moyens de détection de position. Pour ce faire, selon le mode de réalisation représenté sur les Figures 3-12, le dispositif anti-bascule 16 comprend des capteurs infrarouges (IR) 28. Les capteurs IR 28 comprennent une carte émettrice 29 et une carte réceptrice 30, disposées sur une première paroi latérale 31 du tube externe 22 et sur une deuxième paroi latérale 32 du tube externe 22 opposée à la première paroi latérale 31. La carte émettrice 29 comporte trois émetteurs 33 et la carte réceptrice comporte trois récepteurs 34. Au niveau de l'extrémité inférieure 35 du tube externe 22, une première, deuxième et troisième paire de trous circulaires traversants 36a, 36b, 36c sont ménagées dans la première paroi latérale 31 et la deuxième paroi latérale 32. Par inférieur, on entend le côté orienté vers le sol en utilisation et par supérieur, le côté en utilisation tourné à l'opposé du sol. Deux trous circulaires 36a, 36b, 36c de chaque paire sont en regard d'une paroi 31, 32 à l'autre. La carte émettrice 29 et la carte réceptrice 30 sont disposées de telle sorte que les émetteurs 33 et les récepteurs 34 sont positionnés au niveau des trous traversants 36a, 36b, 36c. Ainsi, un signal IR peut être émis et reçu de part et d'autre des première 31 et deuxième 32 parois latérales du tube externe 22. La deuxième paire de trous circulaires 36b et la troisième paire de trous circulaires 36c sont situées sur un même plan horizontal et la première paire de trous circulaires 36a est située en une position supérieure.

De façon correspondante, une première paroi latérale 37 du tube interne 23 et une deuxième paroi latérale 38 du tube interne 23, opposée à la première paroi latérale 37, sont pourvues d'une première, deuxième et troisième paire de trous oblongs traversants 39a, 39b, 39c, dont la grande longueur est orientée dans la direction de la longueur du tube interne 23. Les deux trous oblongs 39a, 39b, 39c de chaque paire sont de même dimension et sont disposés en regard d'une paroi latérale 37, 38 à l'autre. La grande longueur de la première paire de trous oblongs 39a est supérieure à la grande longueur de la troisième paire de trous oblongs 39c, qui est elle-même supérieure à la grande longueur de la deuxième paire de trous oblongs 39b. Dans la direction de la largeur du tube interne 23, la deuxième paire de trous oblongs 39b occupe une position centrale entre la première paire de trous oblongs 39a et la troisième paire de trous oblongs 39c. Dans la direction de la longueur du tube interne 23, les trous oblongs 39a, 39b, 39c sont centrés différemment de sorte que le centre des trous oblongs 39c de la troisième paire occupe une position centrale entre le centre des trous oblongs 39a de la première paire et le centre des trous oblongs 39b de la deuxième paire.

A l'état assemblé du pied télescopique 21, la première paroi latérale 31 du tube externe 22 est en regard de la première paroi latérale 37 du tube interne 22 et la deuxième paroi latérale 32 du tube externe 22 est en regard de la deuxième paroi latérale 38 du tube interne 23. Par ailleurs, les trous circulaires 36a, 36b, 36c et les trous oblongs 39a, 39b et 39c sont positionnés de telle sorte que dans le sens de la largeur du pied télescopique 21, les trous oblongs 39a de la première paire ménagés dans la première 37 et la deuxième 38 paroi latérale du tube interne 23 sont aptes à être en regard des trous circulaires 36a de la première paire ménagés dans la première 31 et la deuxième 32 paroi latérale du tube externe 22, respectivement. De même les trous oblongs 39b de la deuxième paire ménagés dans la première 37 et la deuxième 38 paroi latérale du tube interne 23 sont aptes à être en regard des trous circulaires 36b de la deuxième paire ménagés dans la première 31 et la deuxième 32 paroi latérale du tube externe 22, respectivement, et les trous oblongs 39c de la troisième paire ménagés dans la première 37 et la deuxième 38 paroi latérale du tube interne 23 sont aptes à être en regard des trous circulaires 36c de la troisième paire ménagés dans la première 31 et la deuxième 32 paroi latérale du tube externe 22, respectivement.

Au niveau de l'extrémité supérieure 40 du tube externe 22 est disposé un dispositif d'actionnement linéaire 41. Le dispositif d'actionnement linéaire 41 comporte des moyens moteurs, ici un moteur électrique 42, et une barre de guidage, ici une vis trapézoïdale 43, configurée pour être mise en rotation par les moyens moteurs. La vis 43 traverse une paroi supérieure 44 du tube externe 22 et s'étend à l'intérieur du pied télescopique 21 sur toute la longueur du tube externe 22 et partiellement dans le tube interne 23, son extrémité libre 45 se trouvant à l'intérieur du tube interne 23. Le dispositif d'actionnement linéaire 41 est configuré pour déplacer le tube interne 23 par rapport au tube externe 22.

Le dispositif anti-bascule 16 comporte également un ressort de compression 46. Le ressort de compression 46 vient en appui contre la face inférieure 47 de la paroi supérieure 44 du tube externe 22 et contre la face supérieure 48 d'une paroi supérieure 49 du tube interne 23, au moyen de supports 50. Le ressort de compression 46 est configuré pour être sollicité en compression par le déplacement du tube interne 23 vers l'intérieur du tube externe 22 et ainsi est configuré pour exercer une pression sur la paroi supérieure 40 du tube interne 23 de façon à déployer le tube interne 23 hors du tube externe 22.

Un écrou 51, qui constitue la pièce d'arrêt, est monté vissé sur la vis 43, à l'intérieur du tube interne 23. L'écrou 51 est de section carrée et est dimensionné de telle sorte que la surface externe 52 de l'écrou 51 épouse la surface interne 53 du tube interne 23. Par conséquent, sous l'effet de la rotation de la vis 43, l'écrou 51 est mobile le long de la vis 43 entre l'extrémité libre 45 de la vis 43 et la face inférieure 54 de la paroi supérieure 49 du tube interne 23. L'écrou 51 est ainsi configuré pour relever le tube interne 23 en exerçant une pression sur la paroi supérieure 49 du tube interne 23.

Ainsi, la paroi supérieure 40 du tube interne 23 constitue une partie de sollicitation du tube interne 23 pour déployer/rétracter le tube interne 23 par rapport au tube externe 22, c'est-à-dire à l'état assemblé du véhicule à auto-équilibrage 1, abaisser/relever le tube interne 23, au moyen respectivement du ressort de compression 46 et de l'écrou 51, respectivement.

Le dispositif anti-bascule 16 comporte en outre des moyens de verrouillage 55 en position du tube interne 23. Les moyens de verrouillage 55 comprennent un aimant de levage 56 et un crochet 57 configuré pour être actionné par l'aimant de levage 56 au moyen d'un piston 58. Un trou traversant 59 est ménagé dans la première paroi latérale 31 du tube externe 22 et, de façon correspondante, un trou traversant 60 est ménagé dans la première paroi latérale 37 du tube interne 23. Le tube interne 23 est maintenu en position lorsque le trou traversant 59 du tube externe 22 et le trou traversant 60 du tube interne 23 coïncident, l'extrémité libre 61 du crochet 57 venant en appui contre la surface supérieure 62 du trou traversant 60 du tube interne 23 de façon à empêcher le déploiement du tube interne 23 par rapport au tube externe 22 en position abaissée. L'aimant de levage 56 est configuré pour actionner le crochet 48 par manque de courant, soit suite à une commande déterminée provenant des moyens de commande soit suite à une panne de courant.

Au niveau de l'extrémité inférieure 63 du tube interne 23 est fixée de façon solidaire une fourche 64. La fourche 64 est constituée par une plaque plane 65 contenue dans un plan perpendiculaire au tube interne 23. La fourche 64 représentée sur les Figures 3-4 présente trois branches 66. Des patins 67 sont disposés au-dessous des extrémités 68 des branches 66 et sont configurés pour venir en contact avec le sol, et forment ainsi chacun une région de contact. La fourche 64 constitue une partie de contact du dispositif anti-bascule 16, destinée à venir en contact avec le sol de façon à immobiliser le véhicule à auto-équilibrage 1. La fourche 64 est ainsi mobile grâce aux déplacements du tube interne 23 entre une position relevée où elle ne s'oppose pas au déplacement du véhicule à auto-équilibrage 1 et une position abaissée où elle vient en contact avec le sol. Lorsque la fourche 64 est en position abaissée, le basculement vers l'avant ou vers l'arrière du véhicule à auto-équilibrage 1 est empêché par un effet d'arc-boutement se produisant entre le tube interne 23 et le tube externe 22, effet qui empêche lui-même le tube interne 23 de remonter dans le tube externe 22. La fourche 64 et les tubes 22 et 23 seront spécifiquement dimensionnés pour cet effet d'arc-boutement, en particulier en s'assurant que l'on dispose d'une longueur de fourche permettant cet effet compte tenu de la longueur d'emboîtement restant entre les tubes externe 22 et 23 lorsque la fourche 64 est en position abaissée et que le véhicule à auto-équilibrage 1 a cherché à basculer.

En outre, de façon avantageuse, le tube interne 23 est relié à la plaque plane 65 en une position décentrée vers l'arrière, comme représenté sur les Figures 4-8. Ceci a pour effet de bloquer davantage un basculement vers l'avant du véhicule à auto-équilibrage 1. Par avant, on entend le côté vers lequel le véhicule à auto-équilibrage 1 avance et par arrière, le côté vers lequel le véhicule à auto-équilibrage 1 recule.

Par ailleurs, le véhicule à auto-équilibrage 1 comporte un vérin de stabilisation 69. Comme on peut le voir sur les Figures 1 et 2, le vérin de stabilisation 69 est fixé au châssis 3 et est configuré pour plaquer la fourche 64 au sol. Pour ce faire, un piston 70 est déployé sur commande de l'utilisateur une fois la fourche 64 en contact avec le sol. Un tel vérin de stabilisation 69 a pour fonction de renforcer la stabilité du véhicule à auto-équilibrage 1 immobilisé par le dispositif anti-bascule 16. De préférence, le piston 70 est configuré pour venir en contact avec la partie arrière de la fourche 64.

Des moyens de commande sont prévus pour commander le dispositif d'actionnement linéaire 41, les moyens de verrouillage 46 et le vérin de stabilisation 69. Les moyens de commande sont également connectés aux capteurs IR 28 et à la batterie.

Ces moyens de commande pourront, par exemple, comprendre un calculateur, tel que constitué par un microprocesseur, configuré pour commander les différents composants du véhicule à auto-équilibrage 1 en fonction d'informations issus de différents capteurs (système gyroscopique, accéléromètre, potentiomètre, etc.).

On va ci-après décrire le fonctionnement du véhicule à auto-équilibrage 1 selon la présente invention et plus particulièrement le dispositif anti-bascule 16.

Sur les Figures 1, 5 et 9, le dispositif anti-bascule 16 est représenté à l'état relevé. Dans cet état, le tube interne 23 est en position relevé et la fourche 64 est en position verrouillée, c'est-à-dire que le tube interne 23 est rétracté à l'intérieur du tube externe 22. La fourche 64 n'est pas en contact avec le sol et est suffisamment relevée pour ne pas s'opposer au déplacement du véhicule à auto-équilibrage 1. Le ressort de compression 46 est comprimé. L'écrou 51 est au niveau de l'extrémité libre 45 de la vis 44. Le crochet 57 est en prise contre le trou 60 du tube interne 23. Cette position verrouillée de la fourche 64 est détectée par les capteurs IR 28. Les trous circulaires 36a de la première paire et les trous oblongs 39a de la première paire coïncident. L'écrou 51 étant interposé à ce niveau, le signal IR émis n'est pas reçu. Les trous circulaires 36b de la deuxième paire et les trous oblongs 39b de la deuxième paire ne coïncidant pas, le signal IR émis n'est pas reçu. Les trous circulaires 36c de la troisième paire et les trous oblongs 39c de la troisième paire coïncidant, le signal IR émis est reçu. Ces informations relatives aux signaux IR sont transmises aux moyens de commande qui sont aptes à arrêter la rotation de la vis 43 lorsqu'elle est atteinte.

Lorsque l'utilisateur souhaite stabiliser le véhicule 1 en fonctionnement normal, pour abaisser la fourche 64 une commande de l'utilisateur amène les moyens de commande à dans un premier temps mettre en rotation la vis 43 dans un premier sens. Du fait que la surface externe 52 de l'écrou 51 épouse la surface interne 53 du tube interne 23, l'écrou 51 est amené à remonter le long de la vis 43 jusqu'à venir en butée contre la face inférieure 54 de la paroi supérieure 49 du tube interne 23. Là, les moyens de commande commandent l'aimant de levage 56, par simple coupure de l'alimentation de celui-ci, de façon à relever le crochet 57, la descente du tube interne 23 sous l'effet de la détente du ressort de compression 46 étant alors empêchée par la présence de l'écrou 51 en butée contre la face inférieure 54 de la paroi supérieure 49 du tube interne 23. Les moyens de commande commandent le dispositif d'actionnement linéaire 41 de façon à mettre en rotation la vis 43 dans l'autre sens, ce qui a pour effet de faire coulisser le tube interne 23 hors du tube externe 22, sous l'effet du ressort de compression 46 agissant sur la paroi supérieure 49 du tube interne 23, jusqu'à une position abaissée de la fourche 64, en contact avec le sol par ses patins 67, empêchant l'inclinaison du véhicule à auto-équilibrage 1, comme représenté sur les Figures 2, 4, 6 et 10. Il convient de noter que la position abaissée varie en fonction de la nature du sol. Par exemple, si le sol présente un renfoncement entre les roues 4, la fourche 64 se trouvera en-dessous de la ligne reliant les régions de contact des roues 4 avec le sol. Si le sol est surélevé entre les roues 4, la fourche 64 se trouvera au-dessus de la ligne reliant les régions de contact des roues 4 avec le sol.

Un tel fonctionnement correspond à une utilisation dite normale où les commandes proviennent de l'utilisateur qui souhaite stabiliser le véhicule à auto-équilibrage 1 à l'arrêt, par exemple pour en descendre ou bien économiser la batterie. Il s'agit du premier type de commande. Ces actions peuvent être complétées par le déploiement du piston 70 du vérin de stabilisation 69 contre la fourche 64.

Lorsqu'un état anormal se produit, les moyens de verrouillage 46 se déverrouillent, soit automatiquement en cas de panne de courant soit automatiquement sur commande des moyens de commande lorsqu'un état détecté correspond à un état prédéterminé, par exemple une inclinaison trop prononcée du châssis 3. Il s'agit alors du second type de commande. Pour ce faire, les moyens de commande peuvent comprendre une mémoire qui contient des états prédéterminés de fonctionnement non normal du véhicule à auto-équilibrage 1. Dans ce cas, le crochet 57 est relevé par l'aimant de levage 56, l'alimentation électrique de ce dernier n'étant plus assurée. Du fait que l'écrou 51 est située au niveau de l'extrémité libre 45, la détente du ressort de compression 46 conduit à abaisser le tube interne 23 jusqu'à ce que la fourche 64 vienne en contact avec le sol par ses patins 67, contact conduisant au blocage du tube interne 23 dans le tube externe 22 par arc-boutement et empêchant une remontée de la fourche 64, ce qui interdit l'inclinaison non souhaitée du véhicule à auto-équilibrage 1. Grâce au ressort de compression 46, un tel déploiement peut ainsi être immédiat pour sécuriser le véhicule à auto-équilibrage 1. Cette position abaissée, telle que représentée sur les Figures 2, 4, 6 et 10, est détectée par les capteurs IR 28. Les trous circulaires 36a de la première paire et les trous oblongs 39a de la première paire coïncident. L'écrou 51 étant interposé à ce niveau, le signal IR émis n'est pas reçu. Les trous circulaires 36b de la deuxième paire et les trous oblongs 39b de la deuxième paire ne coïncidant pas, le signal IR émis n'est pas reçu. Les trous circulaires 36c de la troisième paire et les trous oblongs 39c de la troisième paire ne coïncidant pas, le signal IR émis n'est pas reçu. Ces informations relatives aux signaux IR sont transmises aux moyens de commande.

Pour relever la fourche 64 après qu'elle a été déployée suivant le second type de commande, et ainsi l'amener en une position relevée où elle ne s'oppose pas au déplacement du véhicule à auto-équilibrage 1, une commande de l'utilisateur amène les moyens de commande à mettre en rotation la vis 43 dans le premier sens de rotation. L'écrou 51 remonte le long de la vis 34 jusqu'à être amené en butée contre la face inférieure 54 de la paroi supérieure 49 du tube interne 23, ce qui a pour effet de relever le tube interne 23 jusqu'à une position relevée de la fourche 64, le ressort de compression 46 étant amené à un état comprimé. Cette position relevée, telle que représenté sur les Figures 1, 7 et 11, est détectée par les capteurs IR 28. Les trous circulaires 36a de la première paire et les trous oblongs 39a de la première paire coïncident. Aucun obstacle n'étant interposé, le signal IR émis est reçu. De même, les trous circulaires 36b de la deuxième paire et les trous oblongs 39b de la deuxième paire coïncidant sans obstacle interposé, le signal IR émis est reçu. Les trous circulaires 36c de la troisième paire et les trous oblongs 39c de la troisième paire coïncidant sans obstacle interposé, le signal IR émis est reçu. Ces informations relatives aux signaux IR sont transmises aux moyens de commande qui sont aptes à arrêter la rotation de la vis 43 lorsque la position relevée est atteinte.

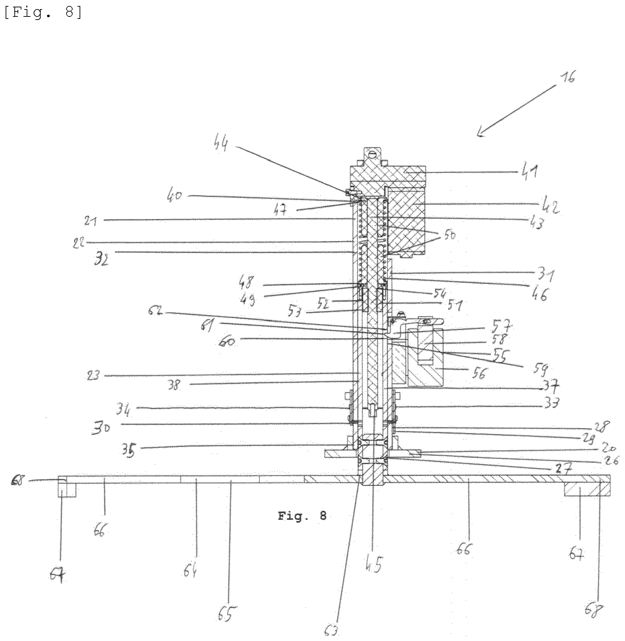

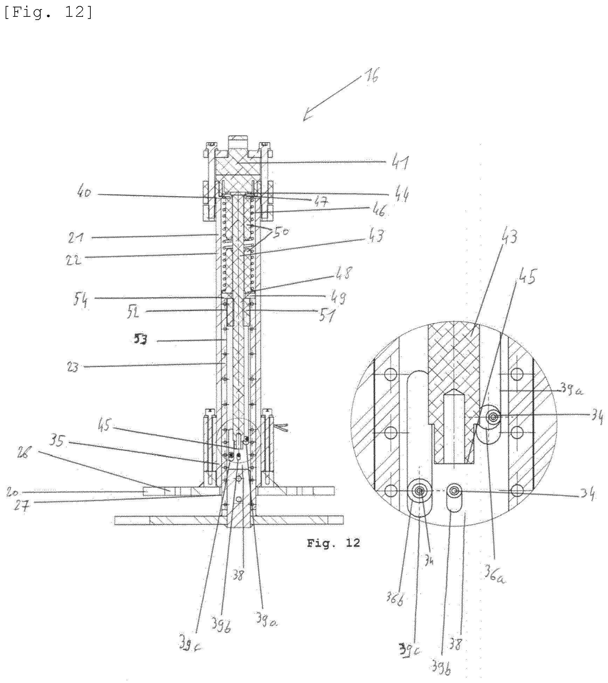

Le crochet 57 est abaissé de sorte que son extrémité libre 61 se trouve dans les trous 59 et 60 coïncidant, comme on peut le voir sur les Figures 8 et 12.

Ensuite, les moyens de commande commandent la rotation de la vis 43 dans le second sens de rotation pour abaisser comme précédemment le tube interne 23 ce qui amène l'extrémité libre 61 du crochet 57 en butée contre la surface supérieure 62 du trou 60 du tube interne 23. La fourche 64 est ainsi amenée en une position verrouillée, intermédiaire entre la position relevée et la position abaissée. Dans cette position verrouillée, la fourche 54 ne s'oppose pas au déplacement du véhicule à auto-équilibrage 1. Cette position est détectée par les capteurs IR 28. Les trous circulaires 36a de la première paire et les trous oblongs 39a de la première paire coïncident. Aucun obstacle n'étant interposé, le signal IR émis est reçu. Les trous circulaires 36b de la deuxième paire et les trous oblongs 39b de la deuxième paire ne coïncidant pas, le signal IR émis n'est pas reçu. Les trous circulaires 36c de la troisième paire et les trous oblongs 39c de la troisième paire coïncidant, le signal IR émis est reçu. Ces informations relatives aux signaux IR sont transmises aux moyens de commande qui sont aptes à arrêter la rotation de la vis 43 lorsque la position verrouillée est atteinte.

Enfin, le dispositif est réarmé, pour permettre au besoin le fonctionnement suivant le seconde type de commande, en amenant l'écrou 42 au niveau de l'extrémité libre 45 de la vis 43 en continuant la rotation de la vis 43.

Il est bien entendu que les modes de réalisation qui viennent d'être décrits ont été donnés à titre indicatif et non limitatif et que des modes de réalisation peuvent y être apportés sans que l'on s'écarte pour autant du cadre de la présente invention, qui est définie exclusivement par les revendications en annexe.

## Revendications

1. Véhicule à auto-équilibrage (1) comportant :
- une base roulante (2), la base roulante (2) comprenant un châssis (3), deux roues (4) chacune aptes à tourner autour d'un axe de rotation (5) et un dispositif d'entraînement configuré pour commander la rotation des roues (4) et équilibrer dynamiquement le véhicule (1) ; et
- un dispositif anti-bascule (61),
**caractérisé par le fait que** le dispositif anti-bascule (16) comporte :
- un pied télescopique (21) comprenant une partie fixe (22) et une partie mobile (23) ;
- une pièce de contact (64) reliée à la partie mobile (23) et configurée pour venir en contact avec le sol, la partie mobile (23) étant déplaçable en translation, le long d'un axe longitudinal de la partie fixe (22), entre une position relevée où la pièce de contact (64) ne s'oppose pas au déplacement du véhicule (1) et une position abaissée où la pièce de contact (64) vient en contact avec le sol pour éviter un basculement de la base roulante (2), la pièce de contact (64) présentant au moins une région de contact avec le sol qui est décalée de l'axe longitudinal de la partie fixe (22) de telle sorte que la force résultant du contact avec le sol applique sur la partie mobile (23) un moment tel que celle-ci se bloque dans la partie fixe (22) par arc-boutement ;
- un dispositif d'actionnement linéaire (41) comprenant des moyens moteurs (42) et une barre de guidage (43) ayant une extrémité libre (45) située à l'intérieur de la partie mobile (23),
- des moyens de verrouillage (55) de la partie mobile (23), configurés pour verrouiller la partie mobile (23) en une position de verrouillage, la position de verrouillage étant une position intermédiaire entre la position relevée et la position abaissée, les moyens de verrouillage étant aptes à déverrouiller automatiquement la partie mobile (23) ;
- un ressort de compression (46) qui prend appui sur une partie de sollicitation (49) de la partie mobile (23), configuré pour être sollicité en compression par le déplacement de la partie de contact (64) entre la position abaissée et la position relevée, la partie de contact (64) étant configurée pour être déplacée de la position de verrouillage vers la position abaissée sous l'action du ressort de compression (46) ;
- une pièce d'arrêt (51), disposée à l'intérieur de la partie mobile (23) et configurée pour être déplaçable, sous l'action des moyens moteurs (42) du dispositif d'actionnement linéaire (41), le long de la barre de guidage (43), entre l'extrémité libre (45) de la barre de guidage (43) et une position de butée, en butée contre la partie de sollicitation (49) de la partie mobile (23) ; et
- des moyens de commande du dispositif d'actionnement linéaire (41) et des moyens de verrouillage (55), configurés pour à la fois actionner le dispositif d'actionnement linéaire (41) et les moyens de verrouillage (55) suite à un premier type de commande provenant de l'utilisateur et actionner automatiquement les moyens de verrouillage (55) suite à un second type de commande consécutif de l'apparition d'un état préétabli.

2. Véhicule à auto-équilibrage (1) selon la revendication 1, **caractérisé par le fait que** la barre de guidage (43) est une vis sans fin (43) et la pièce d'arrêt (51) est un écrou (51) disposé à l'intérieur de la partie mobile (23) et bloqué en rotation par rapport à cette dernière, l'écrou (51) étant vissé sur la vis (43) et les moyens moteurs (42) étant configurés pour faire tourner la vis (43) dans les deux sens de rotation, de telle sorte que le déplacement en translation de l'écrou (51) est obtenu par rotation de la vis (43) sous l'action des moyens moteurs (42).

3. Véhicule à auto-équilibrage (1) selon l'une quelconque des revendications 1 et 2, **caractérisé par le fait que** la partie fixe (22), la partie mobile (23) et la pièce d'arrêt (51) sont de section carrée.

4. Véhicule à auto-équilibrage (1) selon l'une quelconque des revendications 1 à 3, **caractérisé par le fait que** les moyens de verrouillage (55) comprennent un aimant de levage (56) et un crochet (57) actionnable par l'aimant de levage (56), un trou (59) étant ménagé dans la partie fixe (22) et un trou (60) étant ménagé dans la partie mobile (23) de sorte que le crochet (57) est configuré pour bloquer la partie mobile (23) au niveau du trou de celle-ci.

5. Véhicule à auto-équilibrage (1) selon l'une quelconque des revendications 1 à 4, **caractérisé par le fait que** la partie de contact (64) comporte une partie plane (65) comprenant trois régions de contact (68, 67).

6. Véhicule à auto-équilibrage (1) selon l'une quelconque des revendications 1 à 5, **caractérisé par le fait qu'**il comprend au moins un capteur IR (28) configuré pour détecter la position de la pièce de contact (64), au moins une paire de trous circulaires traversants (36a, 36b, 36c) et au moins une paire de trous oblongs (39a, 39b, 39c) correspondants étant ménagées dans la partie fixe (22) et la partie mobile (23), respectivement.

7. Véhicule à auto-équilibrage (1) selon l'une quelconque des revendications 1 à 6, **caractérisé par le fait que** les moyens de verrouillage (55) sont du type à manque de courant et configurés pour déverrouiller automatiquement la partie mobile (23) en cas de manque de courant.

8. Véhicule à auto-équilibrage (1) selon l'une quelconque des revendications 1 à 7, **caractérisé par le fait qu'**il comprend en outre un vérin de stabilisation (69), configuré pour être actionné par les moyens de commande suite au premier type de commande et configuré pour venir en appui sur la pièce de contact (64) en position abaissée.

9. Véhicule à auto-équilibrage (1) selon l'une quelconque des revendications 1 à 8, **caractérisé par le fait qu'**il comporte un guidon (11), le guidon (11) étant connecté aux moyens d'entraînement et configuré pour commander le déplacement du véhicule (1) vers la gauche et vers la droite sous l'effet d'une pression de l'utilisateur vers la gauche et vers la droite, respectivement.

10. Véhicule à auto-équilibrage (1) selon l'une quelconque des revendications 1 à 9, **caractérisé par le fait qu'**il comporte une batterie configurée pour alimenter au moins les moyens d'entraînement, les moyens de commande, le dispositif d'actionnement linéaire (41) et les moyens de verrouillage (55).

## Patentansprüche

1. - Selbstausbalancierendes Fahrzeug (1), umfassend:
- eine Rollbasis (2), die Rollbasis (2) umfassend ein Fahrgestell (3), zwei Räder (4), die jeweils geeignet sind, um um eine Drehachse (5) zu drehen und eine Antriebsvorrichtung, die konfiguriert ist, um die Drehung der Räder (4) zu steuern und das Fahrzeug (1) dynamisch zu ausbalancieren; und
- eine Antikippvorrichtung (61),
**dadurch gekennzeichnet, dass** die Antikippvorrichtung (61) Folgendes umfasst:
- einen Teleskopfuß (21), umfassend einen feststehenden (22) und einen beweglichen (23) Abschnitt;
- ein Kontaktstück (64), das mit dem beweglichen Abschnitt (23) verbunden und konfiguriert ist, um mit dem Boden in Kontakt zu kommen, wobei der bewegliche Abschnitt (23) entlang einer Längsachse des feststehenden Abschnitts (22) verschiebbar ist, zwischen einer angehobenen Position, in der das Kontaktstück (64) einer Verlagerung des Fahrzeugs (1) nicht entgegensteht, und einer abgesenkten Position, in der das Kontaktstück (64) mit dem Boden in Kontakt kommt, um ein Kippen der Rollbasis (2) zu verhindern, wobei das Kontaktstück (64) mindestens einen Kontaktbereich mit dem Boden aufweist, der von der Längsachse des feststehenden Abschnitts (22) versetzt ist, sodass die Kraft, die aus dem Kontakt mit dem Boden resultiert, ein solches Moment auf den beweglichen Abschnitt (23) ausübt, dass dieser in dem feststehenden Abschnitt (22) durch Momentensperre blockiert wird;
- eine lineare Betätigungsvorrichtung (41), umfassend Antriebseinrichtungen (42) und eine Führungsstange (43), die ein freies Ende (45) aufweist, das sich im Inneren des beweglichen Abschnitts (23) befindet,
- Verriegelungseinrichtungen (55) des beweglichen Abschnitts (23), die konfiguriert sind, um den beweglichen Abschnitt (23) in einer Verriegelungsposition zu verriegeln, wobei die Verriegelungsposition eine Zwischenposition zwischen der angehobenen Position und der abgesenkten Position ist und die Verriegelungseinrichtungen geeignet sind, um den beweglichen Abschnitt (23) automatisch zu entriegeln;
- eine Druckfeder (46), die an einem Belastungsabschnitt (49) des beweglichen Abschnitts (23) anliegt, der konfiguriert ist, um durch die Verlagerung des Kontaktabschnitts (64) zwischen der abgesenkten Position und der angehobenen Position druckbelastet zu werden, wobei der Kontaktabschnitt (64) konfiguriert ist, um unter der Wirkung der Druckfeder (46) aus der Verriegelungsposition in die abgesenkte Position verlagert zu werden;
- ein Arretierstück (51), das im Inneren des beweglichen Abschnitts (23) angeordnet und konfiguriert ist, um unter der Wirkung der Antriebseinrichtungen (42) der linearen Antriebsvorrichtung (41) entlang der Führungsstange (43) zwischen dem freien Ende (45) der Führungsstange (43) und einer Anschlagsposition in Anlage gegen den Belastungsabschnitt (49) des beweglichen Abschnitts (23) verlagerbar zu sein; und
- Steuerungseinrichtungen der linearen Betätigungsvorrichtung (41) und Verriegelungseinrichtungen (55), die konfiguriert sind, um gleichzeitig die lineare Betätigungsvorrichtung (41) und die Verriegelungseinrichtungen (55) auf einen ersten, von dem Benutzer stammenden Befehlstyp hin zu betätigen und automatisch die Verriegelungseinrichtungen (55) auf einen zweiten Befehlstyp hin infolge des Auftretens eines vorher festgelegten Zustands zu betätigen.

2. - Selbstausbalancierendes Fahrzeug (1) nach Anspruch 1, **dadurch gekennzeichnet, dass** die Führungsstange (43) eine Endlosschnecke ist (43) und das Arretierstück (51) eine Mutter (51) ist, die im Inneren des beweglichen Abschnitts (23) angeordnet und in Bezug auf diesen gegen Drehung gesichert ist, wobei die Mutter (51) auf die Schnecke (43) geschraubt ist und die Antriebseinrichtungen (42) konfiguriert, um die Schnecke (43) in die zwei Drehrichtungen zu drehen, sodass die Verschiebung der Mutter (51) durch die Drehung der Schnecke (43) unter der Wirkung der Antriebseinrichtungen (42) erlangt wird.

3. - Selbstausbalancierendes Fahrzeug (1) nach einem der Ansprüche 1 und 2, **dadurch gekennzeichnet, dass** der feststehende Abschnitt (22), der bewegliche Abschnitt (23) und das Arretierstück (51) von einem quadratischen Querschnitt sind.

4. - Selbstausbalancierendes Fahrzeug (1) nach einem der Ansprüche 1 bis 3, **dadurch gekennzeichnet, dass** die Verriegelungseinrichtungen (55) einen Hubmagneten (56) und einen Haken (57), der durch den Hubmagneten (56) betätigbar ist, wobei ein Loch (59) in dem feststehenden Abschnitt (22) ausgebildet ist, und ein Loch (60) in dem beweglichen Abschnitt (23) ausgebildet ist, sodass der Haken (57) konfiguriert ist, um den beweglichen Abschnitt (23) auf Höhe des Lochs davon zu blockieren, umfassen.

5. - Selbstausbalancierendes Fahrzeug (1) nach einem der Ansprüche 1 bis 4, **dadurch gekennzeichnet, dass** der Kontaktabschnitt (64) einen ebenen Abschnitt (65) umfasst, umfassend drei Kontaktbereiche (68, 67).

6. - Selbstausbalancierendes Fahrzeug (1) nach einem der Ansprüche 1 bis 5, **dadurch gekennzeichnet, dass** es mindestens einen IR-Sensor (28) umfasst, der konfiguriert ist, um die Position des Kontaktstücks (64) zu erfassen, wobei mindestens ein Paar kreisförmiger Durchgangslöcher (36a, 36b, 36c) und mindestens ein Paar entsprechender Langlöcher (39a, 39b, 39c) in dem feststehenden Abschnitt (22) bzw. dem beweglichen Abschnitt (23) ausgebildet sind.

7. - Selbstausbalancierendes Fahrzeug (1) nach einem der Ansprüche 1 bis 6, dadurch auszeichnet, dass die Verriegelungseinrichtungen (55) vom Typ für Stromausfall sind und konfiguriert sind, um den beweglichen Abschnitt (23) im Fall eines Stromausfalls automatisch zu entriegeln.

8. - Selbstausbalancierendes Fahrzeug (1) nach einem der Ansprüche 1 bis 7, dadurch auszeichnet, dass es ferner einen Stabilisierungszylinder (69) umfasst, das konfiguriert ist, um von den Steuerungseinrichtungen auf einen ersten Befehlstyp hin betätigt zu werden, und das konfiguriert ist, um in abgesenkter Position an dem Kontaktstück (64) anzuliegen.

9. - Selbstausbalancierendes Fahrzeug (1) nach einem der Ansprüche 1 bis 8, **dadurch gekennzeichnet, dass** es einen Lenker (11) umfasst, wobei der Lenker (11) mit den Antriebseinrichtungen verbunden ist und konfiguriert ist, um die Verlagerung des Fahrzeugs (1) nach links und nach rechts unter der Wirkung eines Drucks des Benutzer nach links bzw. nach rechts zu steuern.

10. - Selbstausbalancierendes Fahrzeug (1) nach einem der Ansprüche 1 bis 9, dadurch auszeichnet, dass es eine Batterie umfasst, die konfiguriert ist, um mindestens die Antriebseinrichtungen, die Steuerungseinrichtungen, die lineare Betätigungsvorrichtung (41) und die Verriegelungseinrichtungen (55) zu versorgen.

## Claims

1. - A self-balancing vehicle (1) comprising:
- a rolling base (2), the rolling base (2) comprising a frame (3), two wheels (4) each being capable of rotating about an axis of rotation (5), and a drive device configured to control the rotation of the wheels (4) and dynamically balance the vehicle (1); and
- an anti-tipping device (61),
**characterised in that** the anti-tipping device (16) comprises:
- a telescopic leg (21) comprising a fixed part (22) and a movable part (23);
- a contact piece (64) connected to the movable part (23) and configured to come into contact with the ground, the movable part (23) being translatable, along a longitudinal axis of the fixed part (22), between a raised position in which the contact piece (64) does not oppose movement of the vehicle (1) and a lowered position in which the contact piece (64) comes into contact with the ground to prevent tipping of the rolling base (2), the contact piece (64) having at least one region of contact with the ground which is offset from the longitudinal axis of the fixed part (22) so that the force resulting from contact with the ground applies such a moment to the moving part (23) that the latter locks into the fixed part (22) by bracing;
- a linear actuating device (41) comprising motor means (42) and a guide bar (43) having a free end (45) located inside the moving part (23),
- locking means (55) for locking the movable part (23), configured to lock the movable part (23) in a locking position, the locking position being an intermediate position between the raised position and the lowered position, the locking means being capable of automatically unlocking the movable part (23);
- a compression spring (46) which bears on a biasing part (49) of the movable part (23), configured to be biased in compression by the movement of the contact piece (64) between the lowered position and the raised position, the contact piece (64) being configured to be moved from the locking position towards the lowered position under the action of the compression spring (46);
- a stop piece (51), arranged inside the movable part (23) and configured to be movable, under the action of the motor means (42) of the linear actuating device (41), along the guide bar (43), between the free end (45) of the guide bar (43) and a stop position, abutting against the biasing part (49) of the movable part (23); and
- control means for controlling the linear actuating device (41) and the locking means (55), configured to both actuate the linear actuating device (41) and the locking means (55) following a first type of control from the user and automatically actuate the locking means (55) following a second type of control subsequent to the occurrence of a preset state.

2. - A self-balancing vehicle (1) according to claim 1, **characterised in that** the guide bar (43) is a worm screw (43) and the stop piece (51) is a nut (51) arranged inside the movable part (23) and locked against rotation relative to the latter, the nut (51) being screwed onto the screw (43) and the motor means (42) being configured to rotate the screw (43) in both directions of rotation, so that the translational movement of the nut (51) is obtained by rotation of the screw (43) under the action of the motor means (42).

3. - A self-balancing vehicle (1) according to any one of claims 1 and 2, **characterised in that** the fixed part (22), the movable part (23) and the stop piece (51) have a square cross-section.

4. - A self-balancing vehicle (1) according to any one of claims 1 to 3, **characterized in that** the locking means (55) comprise a lifting magnet (56) and a hook (57) actuatable by the lifting magnet (56), a hole (59) being provided in the fixed part (22) and a hole (60) being provided in the movable part (23) so that the hook (57) is configured to lock the movable part (23) at the hole thereof.

5. - A self-balancing vehicle (1) according to any one of claims 1 to 4, **characterised in that** the contact piece (64) comprises a flat part (65) including three contact regions (68, 67).

6. - A self-balancing vehicle (1) according to any one of claims 1 to 5, **characterised in that** it comprises at least one IR sensor (28) configured to detect the position of the contact piece (64), at least one pair of circular through holes (36a, 36b, 36c) and at least one pair of corresponding oblong holes (39a, 39b, 39c) being provided in the fixed part (22) and the movable part (23), respectively.

7. - A self-balancing vehicle (1) according to any one of claims 1 to 6, **characterised in that** the locking means (55) are of the power-off type and configured to automatically unlock the movable part (23) in the event of absence of power.

8. - A self-balancing vehicle (1) according to any one of claims 1 to 7, **characterised in that** it further comprises a stabilizing jack (69), configured to be actuated by the control means following the first type of control and configured to bear on the contact piece (64) in the lowered position.

9. - A self-balancing vehicle (1) according to any one of claims 1 to 8, **characterised in that** it comprises a handlebar (11), the handlebar (11) being connected to the drive means and configured to control the movement of the vehicle (1) to the left and to the right under the effect of pressure from the user to the left and to the right, respectively.

10. - A self-balancing vehicle (1) according to any one of claims 1 to 9, **characterised in that** it comprises a battery configured to power at least the drive means, the control means, the linear actuating device (41) and the locking means (55).
